# EUROPEAN PATENT APPLICATION

(11) **EP 4 023 527 A1**
(43) Date of publication of application: **06.07.2022**
(21) Application number: 21217976.6
(22) Date of filing: 28.12.2021
(51) Int. Cl.: B61L 27/33

(54) **SUBSYSTEM AND METHOD FOR CONTROLLING THE SWITCH BETWEEN A MAIN CENTER AND A STANDBY CENTER IN THE INTEGRATED SUPERVISORY CONTROL SYSTEM**

(30) Priority: 30.12.2020 CN 202011643541
(71) Applicant: Guodian Nanjing Automation Co., LTD., 210009 Nanjing City Jiangsu (CN)
(72) Inventor: Li, Peng, Nanjing City, Jiangsu (CN); Qian, Guoming, Nanjing City, Jiangsu (CN); Li, Junda, Nanjing City, Jiangsu (CN); Ji, Wei, Nanjing City, Jiangsu (CN); Shi, Guangde, Nanjing City, Jiangsu (CN)
(74) Representative: Grünecker Patent- und Rechtsanwälte PartG mbB

(57) **Abstract**

The invention discloses a subsystem and a methodfor controlling the switch between a main center and a standby center in anintegrated supervisory control system. The subsystem includes a status service module, a status collection module, a main-standby center operation management service module, and a main-standby center operation management UI module. The status service module, the status collection module, and the main-standby center operation management service module are deployed on the servers of the main-standby control centers and the stations, respectively. The main-standby center operation management UI module is deployed on the workstations of the main-standby control centers and the stations; The status service module communicates with the status collection module and the main-standby center operation management service module separately. The main-standby center operationmanagement service module communicates with the main-standby center operation management UI module. The invention realizes a reliable transfer and handover of the line control authority between the main-standby control centers and the stations, thereby forming a complete, flexible and safe operation switchingsolution for the main-standby control centers in the integrated supervisory control system.

## Description

### FIELD OF THE INVENTION

The present invention relates to a kind of subsystem and a method for controlling the switch between a main center and a standby center in the integrated supervisory control system. It belongs to the field of automation system/software design technology.

### BACKGROUND

The construction and operation of the current rail transit integrated supervisory control system has been adopting the main-standby dual control center mode. To improve the stability and reliability of the entire integrated supervisory control system, the standby control center switches on promptly upon the failure of the main control center to ensure the uninterrupted operation of the system, and realizes multi-site disaster tolerance and redundant commanding and control. In the detailed design and implementation, the switching control logic of the main-standby control centers of the integrated supervisory control system must comprehensively consider various factors such as hardware equipment, network, software services, and dispatcher working status, and conduct flexible adjustment and expansion according to different engineering scenarios. Hence, how to achieve stable and reliable dual-center handover management and how to maintain adaptability and flexibility have become the core technical problem and realization difficulty.

As a large-scale distributed automation system, rail transit integrated supervisory control system is responsible for integrating independent subsystems, such as power supply supervision, environment, and equipment supervisory, fire alarm, broadcasting, passenger information, automatic train supervision, automatic fare collection, closed-circuit television, etc., and realizes information exchange, centralized supervision and linkage control between various professional systems of rail transit.

The rail transit integrated supervisory system consists of a control center-level and multiple station-level integrated supervisory control systems. The control center, as a central pivot, is responsible for collecting and processing the status and performance data of important supervised and controlled objects on the entire subway line in real-time for supervision and verification by dispatchers,and supports sending operation mode, point control, and program control commands to the supervised and controlled objects and professional subsystems manually by the dispatcher or automatically by applying a certain set of logical relations, so as to complete the unified supervisory control and management of the entire line of driving, power supply, environment, equipment, and passenger flow services.

To prevent the immeasurable impact caused by the paralyzed control center due to serious failures, terrorist attacks, extreme disasters, etc., the construction and operation of the current rail transit integrated supervisory control system has been adopting the main-standby dual control center mode and multi-site redundant deployment of the control center to improve fault tolerance and disaster prevention capabilities. Its ideal working mode is: The main control center is responsible for the supervisory control of the entire subway line in a normal condition. The standby control center is in hot standby status and collects only the necessary information without affecting the operation of the entire integrated supervisory control system. When the main control center fails, the standby control center is activated to take over its supervision and control missions completely, which ensures the uninterrupted operation of the entire integrated supervisory system.

The essence of the switching of the main-standby control center operation mode of the integrated supervisory control system is to transfer and handover the line control authority between the main-standby control centers and stations, which has a significant impact on the operation and management of the rail transit automation system.While ensuring the consistency of the line control authority of the integrated supervisory system, it is necessary to consider various status factors comprehensively such as hardware equipment, communication networks, software core services, and dispatcher operations, and to even meet the changing demandsof different project deployment modes andspecific management processes of operating units, etc., which have high requirements for flexibility and scalability. Hence, it has become a major technical issue.

Existing technical solution 1: The title of the invention is a rail transit integrated supervisory system and a method for switching between main and standby control centers. The publication (Announcement) No. CN 110217273A discloses an integrated rail transit supervisory system, including themain control center Integrated supervisoryand control system, N station integrated supervisory system (N>1), and standby control center integrated supervisoryand control system.The main control center integrated supervisoryand control system and standby control center integrated supervisory system is connected to the integrated supervisory system of each station through the main ring network. The integrated supervisoryand control system of the standby control center is connected to the main control center of the integrated supervisoryand control system through the main ring network. It receives the system information sent by the main control center and establishes a heartbeat connection with the main control center to detect if the main control center is operating normally. The invention also discloses a method for switching between the main and standby control centers of the rail transit integrated supervisoryand control system, in which stability and reliability of the control center are enhanced, solving the problem of the consistency of line control rights of the integrated supervisory system of the main-standby control centers.

Existing technical solution 2: The title of the invention is a rail transit integrated supervisory system and its main-standby control center switching method. The publication (announcement) number CN111547110A discloses a rail transit integrated supervisory system and the switching method of its main-standby control centers. The main control center and standby control center providesa real-time data synchronization mechanism. ISCS(Integrated Supervisory Control System) of central and station provide hierarchical distributed real-time data synchronization mechanism. The operating mode detection program of the main control center, standby control center, and each station determines respectively whether to switch the operating mode according to the current operating mode and the switching discriminant conditions. The station operation is automatically switched when the station detection program satisfies switching conditions. The switching notice will be presented when the detection program of the main-standby control centers satisfies switching conditions. Once the dispatcher confirms, the switch is automatically completed, ensuring the ISCS system is switched to the expected operation mode with stable operation.

### SUMMARY OF INVENTION

Disadvantages of the existing technical solution 1: The invention provides a method for the standby control center integrated supervisory and control system to detect the operation failure of the main control center integrated supervisory and control system through a heartbeat connection then trigger a control switch. The judgment basis, the integrated supervisory system of the main control center is online or not, is too simple and has insufficient accuracy and flexibility. Inadequate consideration of the judgment basis leads to the failure of the main control center under various circumstance. For example, dispatcher workstations are paralyzed in a large area; the dispatching hall switch failure causes the dispatchers to fail to work normally. These cannot be judged simply by the heartbeat connection between the servers of the integrated supervisory and control system of the main-standby control centers. Disadvantages of the existing technical solution 2: The invention mainly describes the switching logic and strategy design of the main-standby control centers, covering the operation mode, switching judgment conditions, and process definitions, but does not involve the integrated supervisory system, especially how specific the integrated supervisory system software is based description of the implementation scheme.

This invention specifically adopts the following technical solutions: a subsystemfor controlling the switch between themaincontrol center and the standby control center in the integrated supervisory control system, the subsystem comprises a status service module, a status collection module, amain-standby center operation management service module, and a main-standby center operation management UI module; The status service module, the status collection module, and the main-standby center operation management service module are deployed on the servers of the main-standby control centers and the stations; The main-standby center operation management UI module is deployed on the workstations of the main-standby control centers and the stations; The status service module communicates with the status collection module and the main-standby center operation management service module separately; The main-standby center operationmanagement service module communicates with the main-standby center operation management UI module.

As a preferred embodiment,the status collection module is used to collect various types of status information in the integrated supervisory control system; the types of status information can be flexibly configured, including but not limited to: operating status of key hardware equipment, network communication status, core software service running status and dispatcher operating status information; the current integrated supervisory system operating mode is managed and conflict arbitrated by the status service module as a global status.

As a preferred embodiment, the status service module is used to perform aggregation management and network-wide publication of various operating status information of the integrated supervisory control system.

As a preferred embodiment, the main-standby center operation management service module collects various real-time operating status information of the main-standby control centers from the status service module and automatically determines whether to trigger main-standby control centers operation mode switching through configurable logical rules; The real-time operation status information items can be flexibly configured, including but not limited to: whether the key hardware equipment is at fault, the communication network is on or off, and whether the software core service fails.

As a preferred embodiment, themain-standby center operation management UI module is deployed on workstations in the main-standby control centers and stations so that dispatchers and on-duty personnel can view the real-time operating conditions of the main-standby control centers,and are allowedto manually trigger or confirm the switching operation of the operating mode of the main-standby control centers, as a human-in-the-loop that enhances safety in the automatic control process.

The method for controlling the switch between the main control center and the standby control center in the integrated supervisory control system comprises:
Step SS1: Updating the operating status of key functions or key equipment of the main control centerto 'fault' and writing it to the status service module;
Step SS2: The main-standby center operation management service module deployed on the servers of the standby control center applies the preset logical rules on the received failure information of the key functions or key equipment of the main control center pushed by the status service module and then sends the operation mode switching trigger signal to themain-standby center operation management UI module accordingly;
Step SS3: Once the main-standby center operation management UI module displays the received operation mode switching trigger signal, and the dispatcher in the standby control center agrees the switching operation and then the agreement information is fed back to the the main-standby centeroperation management service module;
Step SS4: Once receiving the agreement message from the dispatcher of the standby control center, the main-standby center operation management service module updates the current operating mode status of the system to the standby control center operating mode and writes the current operating mode status of the system to the status service module, publishing on the entire network.

As a preferred embodiment, the step SS1 specifically comprises: when the integrated supervisory control system is in the operating mode of the main control center and the key functions of the main control center or key equipmentfail, the key equipment status collection module deployed on the servers of the main control center detects the fault, and update the operation status of the corresponding key functions or key equipment of the main control center, in this case the key functions or key equipment corresponding to the main control center updatethe operation status to 'fault', and writethe operating mode status of the system to the status service module;The key functions and key equipment of the control center can be configured flexibly, including but not limited to the dispatching hall network switch, a ring network core switch, a core server, a dispatcher workstation, etc.

As a preferred embodiment, the step SS2 specifically comprises: the status service module publishes the'fault' status information to the entire network in real-time;The main-standby center operation management service module deployed on the standby control center servers receive the key functions or key equipment failure information of the main control center pushed by the status service module and check whether the preset determining conditions for switching to the standby control center operation mode are satisfied and sends the operation mode switching trigger signal to the main-standby center operation management UI module; The determining conditions can be configured flexibly.

As a preferred embodiment, the step SS3 specifically comprises: once the main-standby center operation management UI module deployed on the standby control center workstation receives the switching triggersignal, a dialog box for switching to standby control center operation mode pops up on the dispatcher operation human-machine interface, and wait for the agreement of the standby control center dispatcher and feedback the agreement information to the operation management service module once the dispatcher agrees.

As a preferred embodiment, the step SS4 specifically comprises: the main-standby center operation management service module updates the current operating mode status of the system to the standby control center operating mode once receiving the agreement message from the standby control center dispatcher and writes the operating mode status of the system to the status service module;The status service module publishes the information that the system has been switched to the standby center operation mode to each of the node in the entire network, thereby completes switching to the standby control center operation mode and authority transfer.

The contribution of this invention: 1) Compared with the existing technical solutions, a modular and service-oriented core design concept is adopted by the "main-standby center switching control subsystem of the integrated supervisory system based on status service" in this invention. A flexible and efficient implementation solution for switching control between main and standby control centers of an integrated supervisory and control system is proposed. The status service module incorporates various types, multi-nodes, decentralized influencing factors, and status information that need to be paid attention to in the switch control design of the main-standby control centers into a unified, real-time status service management, and realizes the support for fast retrieval, subscription-publishing of the entire network, and flexibility expansion. coordinated with the logically editable master/standby switch control management module. The working situation of the main-standby control centers and the comprehensive perception of timely identification of abnormalities are realized by cooperating with the logically editable main-standby switch control management module, to remind dispatchers and start the switching control process of the main-standby control center in time. Finally, the status service module realizes the reliable transfer and handover of the line control authority between the main-standby control centers and the station, thereby forming a complete and flexible integrated supervisory system main-standby center switching control solution. 2)Status service module supporting hierarchical distributed architecture incorporate the various types, multi-nodes, and decentralized status information and influencing factors that need to be supervised in the switching control of the main-standby centers into unified management, thereby supporting rapid retrieval, network subscription-publishing, and having greater flexibility and scalability; 3) The status service module of the hierarchical distributed architecture realizes the reliable transfer of the line control authority as the unique token between the main-standby control centers and the station and ensures the consistency of the entire network, which is superior to the single management of the line control authority of the traditional integrated supervisory system mode, effectively avoiding the risk of single point of failure, and better usability; 4) The status service module of the hierarchical distributed architecture can be used as the new basic service of the integrated supervisory system software platform. It can provide effective technical support for the upper-level and advanced applications of other integrated supervisory and control systems in terms of multi-source status information sharing, conflict detection, arbitration, and task fault-tolerant management; 5) The main-standby center operation management service module based on status information notification and logic configuration can perceive theoperation status of the main-standby control centers more comprehensively and efficiently and identify abnormalities and faults in time, to remind dispatchers and start the switching control process of the main-standby control center in time with efficiency and accuracy.

### BRIEF DESCRIPTION OF THE DRAWINGS

FIG. 1 is a schematic diagram of the overall architecture topology of the present invention;
FIG. 2 is a schematic diagram of the network-wide publication and synchronization of status information of the present invention;
FIG. 3 is a framework of the operation mode switching of the standby control center of the present invention.

### EMBODIMENT ONE

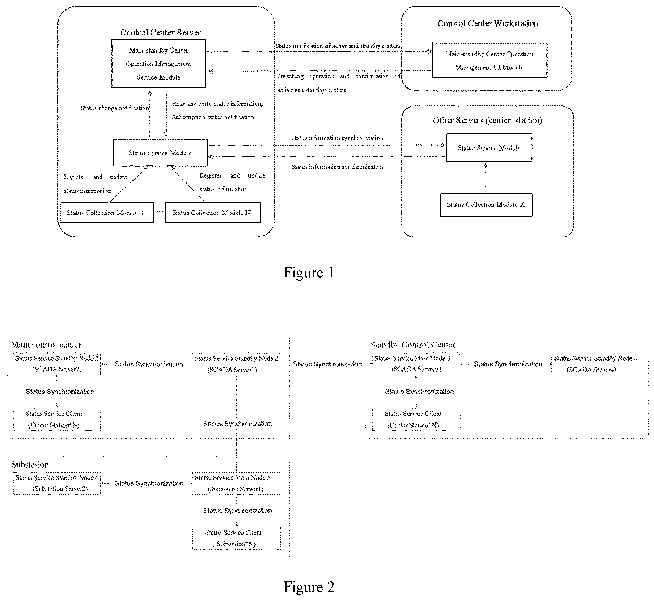

The present invention will be further described below by referring to the figures. The following embodiment is only used to illustrate the technical solutions of the present invention more clearly and cannot be used to limit the protection range of the present invention. The present invention proposes a subsystem for controlling the switch between the main control center and the standby control center in the integrated supervisory control system. The architecture based on the status service module is adopted. As shown in Figure 1, this system is composed of a status service module, a status collection module, amain-standby center operation management service module, and amain-standby center operation management UI module. The status collection module, status service module, and main-standby center management service modules are deployed on the servers of the main-standby control centers and stations. The main-standby center operation management UI modules are deployed on the workstations for dispatcher or on-duty personnel of the main-standby control centers and stations. The status collection module is responsible for collecting various status information in the integrated supervisory control system, such as the working status of key hardware equipment, communication network status, software core service running status, dispatcher operating status, etc., and supports data collection mechanisms, such as timing scanning and change triggering. The status information is registered to the status service module through a uniform interface and is updated in real-time.

The status service module is mainly responsible for the aggregation management and network-widepublication of various operating status information of the integrated supervisory control system. It provides an open and uniform status information registration, read-write updating, and subscription-publish interface, and supportsseveral program calling methods, such as API, IPC, Web service, etc., for being flexibly utilized by other application software modules. In addition, it also supports configurable conflict detection and arbitration and task fault tolerance mechanisms in the entire network and clusters (centers, stations). The status service module can be flexibly deployed on the servers and workstation nodes of the integrated supervisory control system according to the demands.

The main-standby operation management service module collects various real-time information about the operating conditions of the main control center and the standby control center from the status service module, such as whether the key hardware equipment is at fault, whether the communication network is on or off, whether the software core service fails, etc. According to the flexibly configurable detection and judgment logic, the abnormal operation and failure of the main-standby control centers are able to be detected in time, and the dispatchers are able to be reminded to start the switching control process of the main-standby control centers in time.

The main-standby center operation management UI modules are deployed on workstations of the main-standby control centers and station, which are convenient for dispatcher and on-duty personnel to view the operating conditions of the main-standby control centers. Moreover, as a human-in-the-loop that enhances safety in the automatic control process, it allows dispatchers to manually trigger or confirm the switching operation of the main-standby control center operatingmode.

The real-time collection of various status information of the main-standby control centers is completed by a series of customized and flexibly configured status collection modules, such as the network switch status supervisory module, the server status supervisory module, the workstation status supervisory module, etc., which are independent and non-interfering with each other, and deployed flexibly on different machine nodes in the integrated supervisory control system through a uniform registration and data publication interface. The caching of status information and the network-wide publication are completed by the status service module, which consists of two roles which are the server and the client and both providestatus information registration, read-write update, subscription-release functions. The servers of the status service module are also responsible for the publication and synchronization of status information between the main control center and the standby control center, and between the center and the stations. As shown in Figure 2, the module operates across network segments by flexibly using multicast or TCP communication methods. The reliability is further guaranteed by deploying the main-standby fault-tolerance, to fully meet the requirements of the hierarchicaldistributed architecture of the integrated supervisory control system.

The operation modes of the integrated supervisory control system can be divided into the maincontrol center operation mode, the standby center operation mode, and the degraded (station) operation mode. The difference lies in the area to which the current line control authority belongs (belonging to the main control center, the standbycontrol center, or the stations along the line). The essence of the operation mode switching is that the line control authority is transferred and handed over among the main control center, the standby control center, and the stations. In the design of the present invention, the operating mode of the integrated supervisory control system is managed and conflict arbitrated by the status service module as a global status and is maintainedconsistently across the entire network as the one and only token. The operation mode is chosen as the preset constraint condition of all control operations of the main-standby control centers and stations, thereby ensuring consistency of the line control authority of the integrated supervisory control system across the entire network.

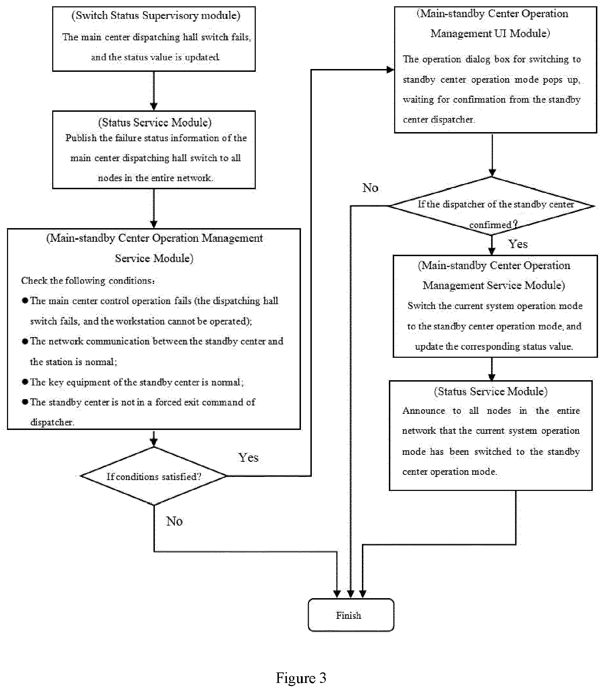

The following takes the scenario ofthe main control center dispatching hall network switch failure under the main control center operating mode triggering the switch to the standby control center operating mode as an example to illustrate the specific design implementation and processing flow. As shown in Figure 3,when the network switch in the dispatching hall of the main control center fails (The dispatcher's workstations are all offline and the line control is unable to be operated), the switch status supervisory module deployed on the servers of the main control center detects the fault, updates the operating status of the main control center dispatching hall network switch to 'fault' and writes it into the status service module. The status service module publishes the fault status information to the entire network in real-time. The main-standby center operation management service module deployed on the standby control center servers receives the main control center dispatching hall network switch failure information sent by the status service module and checks whether the preset judgment conditions for switching to standby control center operation mode are satisfied. For example, the standby control center is currently communicating with the station network normally,key pieces of equipment of the standby control center(servers, switches, workstations, etc.) are working normally, and the standby control center is not in a forced exit command status, etc. When the conditions are satisfied, the operation mode switching trigger signal is sent to the main-standby center operation management UI module. Once the main-standby center operation management UI module deployed on the standby control center workstation receives the switching trigger signal, a dialog box for switching to standby control center operation mode pops up on the dispatcher operation human-machine interface, and waits for the standby control center dispatcher's confirmation. Once the dispatcher agrees, the agreement information is fed back to the main-standby center operation management service module. The main-standby center operation management service module updates the operating mode status of the system to the standby control center operating mode once receiving the agreement confirmation message from the standby control center dispatcher and writes it into the status service.The status service module publishes the information that the system has been switched to the standby center operation mode to all nodes in the entire network, thereby completing the standby control center operation mode switching and authority transfer.

Explanation of related technical terms: ISCS: Integrated Supervisory Control System; API: Application Programming Interface; IPC : Inter-Process Communication; UI: User Interface.

The above is only the preferred embodiment of the present invention, it is to be appreciated various alterations, modifications and improvements will readily occur to those skilled in the art. Such alterations, modifications, and improvements are intended to be part of this disclosure and are intended to be within the spirit and scope of the invention. Accordingly, the foregoing description and drawings are by way of example only.

## Claims

1. A subsystemfor controlling the switch between a main center and astandby center in the integrated supervisory control system, the subsystem comprises a status service module, a status collection module, amain-standby center operation management service module, and a main-standby center operation management UI module; The status service module, the status collection module, and the main-standby center operation management service module are deployed on the servers of the main-standby control centers and the stations; The main-standby center operation management UI module is deployed on the workstations of the main-standby control centers and the stations; The status service module communicates with the status collection module and the main-standby center operation management service module separately; The main-standby center operationmanagement service module communicates with the main-standby center operation management UI module.

2. The subsystem for controlling the switch between themain center and the standby center in the integrated supervisory control system of claim 1, wherein the status collection module is used to collect various types of status information in the integrated supervisory control system; the types of status information can be flexibly configured, including but not limited to: operating status of key hardware equipment, network communication status, core software service running status and dispatcher operating status information; the current integrated supervisory system operating mode is managed and conflict arbitrated by the status service module as a global status.

3. The subsystem for controlling the switch between themain center and the standby center in the integrated supervisory control system of claim 1, wherein the status service module is used to perform aggregation management and network-wide publication of various operating status information of the integrated supervisory control system.

4. The subsystem for controlling the switch between themain center and the standby center in the integrated supervisory control system of claim 1, wherein the main-standby center operation management service module collects various real-time operating status information of the main-standby control centers from the status service module and automatically determines whether to trigger main-standby control centers operation mode switching through configurable logical rules; The real-time operation status information items can be flexibly configured, including but not limited to: whether the key hardware equipment is at fault, the communication network is on or off, and whether the software core service fails.

5. The subsystem for controlling the switch between the main center and the standby center in the integrated supervisory control system of claim 1, wherein themain-standby center operation management UI module is deployed on workstations in the main-standby control centers and stations so that dispatchers and on-duty personnel can view the real-time operating conditions of the main-standby control centers,and are allowedto manually trigger or confirm the switching operation of the operating mode of the main-standby control centers, as a human-in-the-loop that enhances safety in the automatic control process.

6. The method for controlling the switch between themain center and the standby center in the integrated supervisory control system comprises:
Step SS1: Updating the operating status of key functions or key equipment of the main control centerto 'fault' and writing it to the status service module;
Step SS2: The main-standby center operation management service module deployed on the servers of the standby control center applies the preset logical rules on the received failure information of the key functions or key equipment of the main control center pushed by the status service module and then sends the operation mode switching trigger signal to themain-standby center operation management UI module accordingly;
Step SS3: Once the main-standby center operation management UI module displays the received operation mode switching trigger signal, and the dispatcher in the standby control center agrees the switching operation and then the agreement information is fed back to the main-standby center operation management service module;
Step SS4: Once receiving the confirmation message from the dispatcher of the standby control center, the main-standby center operation management service module updates the current operating mode status of the system to the standby control center operating mode and writes the current operating mode status of the system to the status service module, publishing on the entire network.

7. The method for controlling the switch between the main center and the standby center in the integrated supervisory control system of claim **6**, wherein the step SS1 specifically comprises: when the integrated supervisory control system is in the operating mode of the main control center and the key functions of the main control center or key equipmentfails, the key equipment status collection module deployed on the servers of the main control center detect the fault, and update the operation status of the corresponding key functions or key equipment of the main control center, the key functions or key equipment corresponding to the main control center updatethe operation status to 'fault', and writethe operating mode status of the system to the status service module;The key functions and key equipment of the control center can be configured flexibly, including but not limited to the dispatching hall network switch, a ring network core switch, a core server, a dispatcher workstation, etc.

8. The method for controlling the switch between the main center and the standby center in the integrated supervisory control system of claim **6,** wherein the step SS2 specifically comprises: the status service module publishes the'fault' status information to the entire network in real-time;The main-standby center operation management service module deployed on the standby control center servers receives the key functions or key equipment failure information of the main control center pushed by the status service module and check whether the preset determining conditions for switching to the standby control center operation mode are satisfied and sends the operation mode switching trigger signal to the main-standby center operation management UI module; The determining conditions can be configured flexibly.

9. The method for controlling the switch between the main center and the standby center in the integrated supervisory control system of claim **6**, wherein the step SS3 specifically comprises: once the main-standby center operation management UI module deployed on the standby control center workstation receives the switching triggersignal, a dialog box for switching to standby control center operation mode pops up on the dispatcher operation human-machine interface, and wait for the agreement of the standby control center dispatcher and feedback the agreement information to the main-standby center operation management service module once the dispatcher agrees.

10. The method for controlling the switch between the main center and the standby center in the integrated supervisory control system of claim 6, wherein the step SS4 specifically comprises: the main-standby center operation management service module updates the current operating mode status of the system to the standby control center operating mode once receiving the agreement message from the standby control center dispatcher and writes the operating mode status of the system to the status service module;The status service module publishes the information that the system has been switched to the standby center operation mode to each of the node in the entire network, thereby completes switching to the standby control center operation mode and authority transfer.
